# EUROPEAN PATENT SPECIFICATION

(11) **EP 4 450 585 B1**
(45) Date of publication and mention of the grant of the patent: **06.05.2026**
(21) Application number: 22907985.0
(22) Date of filing: 15.12.2022
(51) Int. Cl.: C09K 3/18

(54) **SNOW REMOVAL COMPOSITION HAVING EXCLLENT ECO-FRIENDLINESS AND ANTI-FREEZING PERFORMANCE**
SCHNEEENTFERNUNGSZUSAMMENSETZUNG MIT EXKLINIERENDER ÖKOFREUNDLICHKEIT UND FROSTSCHUTZLEISTUNG
COMPOSITION D'ÉLIMINATION DE LA NEIGE EXTRÊMEMENT RESPECTUEUSE DE L'ENVIRONNEMENT ET PRÉSENTANT UNE PERFORMANCE ANTIGEL EXCELLENTE

(30) Priority: 17.12.2021 KR 20210181857
(43) Date of publication of application: 23.10.2024
(73) Proprietor: Kim, Young Seok, Anyang-si, Gyeonggi-do 14075 (KR)
(72) Inventor: HONG, Joo Yeon, Anyang-si Gyeonggi-do 14075 (KR); KIM, Young Seok, Anyang-si Gyeonggi-do 14075 (KR)
(74) Representative: dompatent
(86) International application number: PCT/KR2022/020517
(87) International publication number: WO 2023/113518

(56) References cited:
- KR-A- 20010 069 287
- KR-A- 20120 008 311
- KR-A- 20160 083 728
- KR-A- 20190 054 623
- KR-B1- 101 028 193
- KR-B1- 101 361 136
- KR-B1- 101 405 139
- KR-B1- 101 632 412
- US-A- 6 149 833

## Description

### Technical Field

The present invention relates to a snow removal composition and, more specifically, to a snow removal composition having excellent performance in preventing freezing and rapidly melting generated ice while being economical and eco-friendly.

### Background Art

During the winter season, compositions developed for the purpose of removing snow, so-called snow removal agents, are often used to ensure road traffic safety and pedestrian safety. A snow removal agent is a composition mainly aims to convert a solid state of water, that is, ice, existing in the surroundings to a liquid state by generating heat when making contact with moisture, and preventing water from freezing easily on roads and various facilities by lowering the freezing point of water.

Snow removal agents domestically used in South Korea mainly contain calcium chloride or sodium chloride. Calcium chloride is a substance having excellent deliquescence and generates heat when mixed with water. Although the amount of heat generated is less than that generated when mixing calcium chloride with moisture, sodium chloride absorbs and dissolves water in the same manner as calcium chloride, thus lowering the freezing point and preventing refreezing.

As described above, calcium chloride and sodium chloride, often used to remove snow or prevent refreezing, are inexpensive, which is advantageous. However, environmental pollution and corrosion of steel structures and the like caused by chloride ions (Cl-) are pointed out as major problems.

In particular, calcium chloride causes not only steel but also concrete and asphalt to corrode extremely rapidly, thus shortening the lifespan of vehicles, bridges, and all road facilities.

Additionally, calcium chloride is introduced into rivers and soil by being dissolved in water, causing water pollution and soil acidification, and is also known to result in damage to the environment by withering plants such as roadside vegetation and vegetables and causing skin disease and itching on the feet and skin of animals.

Therefore, to solve problems caused by chloride ions, snow removal agents such as an agent with low chlorine content, non-chloride-based agent, or formulation incorporating magnesium rather than sodium and calcium, have been developed.

As one example, Korean Patent No. 10-1361136 has disclosed a composition in which etching wastewater generated during a semiconductor manufacturing process reacts with limestone, slaked lime, and brucite, a magnesium compound. Additionally, Korean Patent No. 10-1471327 has disclosed a composition containing 10 to 15 parts by weight of urea, 0.5 to 1.5 parts by weight of carboxylic acid, 1.0 to 2.0 parts by weight of phosphoric acid, and 80 to 90 parts by weight of sodium chloride in such proportions.

Although the composition described in Korean Patent No. 10-1361136 is advantageous in terms of utilizing industrial waste and not containing or minimizing chloride ions by causing chemical reactions between various acid substances and magnesium compounds present in industrial waste, the manufacturing costs are high. Furthermore, although the use of urea is described as an advantage in the case of Korean Patent No. 10-1471327, there is a disadvantage that urea itself is expensive.

Moreover, in anti-freezing compositions containing chlorine as a whole, sodium chloride, calcium chloride, and magnesium chloride, excluding water, account for at least 60 wt%, which is usually 90 wt% or more, making it difficult to be regarded as achieving technological progress capable of reducing the amount of chloride ions generated compared to typical snow removal agents to which sodium chloride or calcium chloride is applied alone, or a mixture thereof is applied.

### [Document of related art]

### [Patent Document]

(Patent Document 1) Korean Patent No. 10-1361136

US 6 149 833 A discloses a method of melting snow and ice on traffic areas, which comprises applying to the traffic areas covered with snow and ice a deicer in an amount of from 5 to 100 g/m2, which comprises from 30 to 70% by weight of sodium formate, from 30 to 70% by weight of sodium chloride and from 0.1 to 3% by weight of a corrosion inhibitor, and which is used in the form of solid particles having a diameter of from 0.3 to 10 mm or in aqueous solution with a content of from 5 to 25% by weight of the deicer.

### Disclosure

### Technical Problem

The present disclosure, which has been made to solve the problems described above, aims to provide a snow removal composition having as little chloride salt content as possible to be further eco-friendly and economical while being capable of showing the same or superior snow removal ability to that of existing snow removal agents having a chloride salt content of 85% or more to the weight of solid content.

The present disclosure aims to provide a composition having excellent performance in preventing freezing or rapidly melting generated ice while being economical and eco-friendly, and a use thereof.

The above and other objectives and advantages of the present disclosure will become apparent from the following description of preferred embodiments.

### Technical Solution

The invention is set out in the appended set of claims. The above objectives may be achieved by a snow removal composition characterized by including: with respect to the total weight of the composition, a solid content containing 11.000 to 22.000 wt% of a chloride salt, 0.05 to 0.200 wt% of metasilicic acid or a metasilicate, and 0.050 to 10.000 wt% of formic acid or a formate; and the remainder, other than the solid content, being water.

In the composition, the solid content may be characterized by further containing 0.002 to 0.200 wt% of acetic acid or an acetate and 0.001 to 10.000 wt% of glycerin.

The chloride salt is characterized by including one or more selected from the group consisting of sodium chloride, calcium chloride, magnesium chloride, and potassium chloride. The metasilicate is characterized by including one or more selected from the group consisting of lithium metasilicate, sodium metasilicate, potassium metasilicate, calcium metasilicate, and aluminum metasilicate.

The formate is characterized by including one or more selected from the group consisting of lithium formate, sodium formate, potassium formate, calcium formate, and aluminum formate.

The above objectives may be achieved by a snow removal composition characterized by including: with respect to the total weight of the composition, 35.032 to 99.081 wt% of a chloride salt; 0.226 to 0.905 wt% of metasilicic acid or a metasilicate; 0.226 to 45.245 wt% of formic acid or a formate; 0.009 to 0.905 wt% of acetic acid or an acetate; and 0.001 to 45.245 wt% of glycerin.

To achieve the above objectives, provided herein is an aqueous solution composition including: water; a chloride salt; a first additive agent including one or more selected from metasilicic acid, and a metasilicate,; and a second additive agent including one or more selected from formic acid, and a formate, , wherein the aqueous solution composition does not freeze at temperatures of -30°C or above, the molar concentration of chloride salt in the aqueous solution composition is at least 2.4 mol/L and not more than 5.5 mol/L, the molar concentration of the first additive agent is 3% or less of the molar concentration of the chloride salt, and the molar concentration of the second additive agent is 50% or less of the molar concentration of the chloride salt.

In one embodiment, provided is the aqueous solution composition wherein the chloride salt may include at least one selected from sodium chloride and calcium chloride.

In one embodiment, provided is the aqueous solution composition wherein the first additive agent may include sodium metasilicate.

In one embodiment, provided is the aqueous solution composition wherein the second additive agent may include sodium formate.

In one embodiment, the aqueous solution composition may further include glycerin, and provided is the aqueous solution composition wherein the molar concentration of the glycerin may be at least 2 mol/L and not more than 25 mol/L.

In one embodiment, the aqueous solution composition may further include a third additive agent including one or more selected from acetic acid, and an acetate, and provided is the aqueous solution composition wherein the molar concentration of the third additive agent may be 0.1% or less of the molar concentration of the chloride ions.

### Advantageous Effects

The present disclosure can provide a snow removal composition having as little chloride salt content as possible to be further eco-friendly and economical while being capable of showing an equal or superior snow removal ability to that of existing snow removal agents having a chloride salt content of 85% or more based on the weight of solid content.

Therefore, according to the present disclosure, there are advantages of extending not only the lifespan of vehicles, rebar, and steel structures but also the lifespan of roads, bridges, and facility structures by exhibiting excellent metal corrosion resistance. In addition to the advantages of minimizing water pollution and soil acidification as well as achieving excellent eco-friendliness by not causing damage to animals and plants, prices can be lower, enabling wider commercialization.

However, effects of the present disclosure are not limited to the effects mentioned above, and other effects not mentioned will be clearly understood by those skilled in the art from the following description.

### Description of Drawings

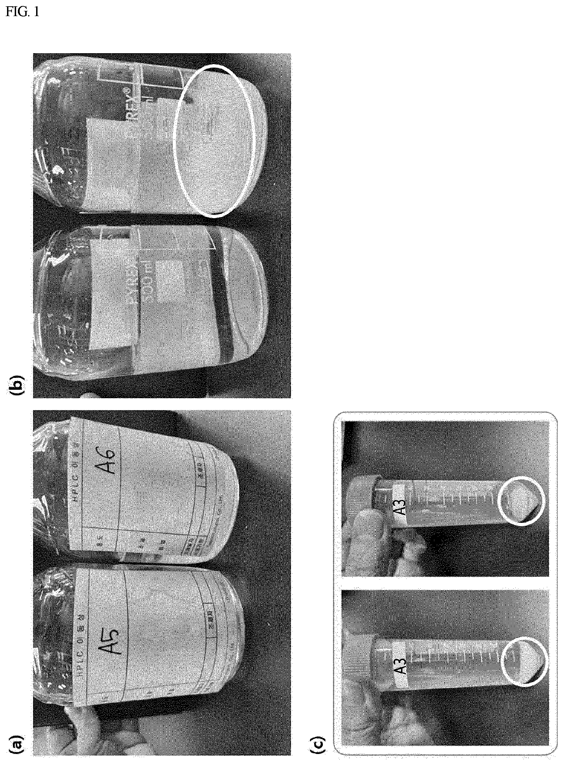

FIG. 1 shows images for the experimental results of Experimental Example 2, wherein FIG. 1A shows the results of preparing Example A5 (left) and Example A6 (right) in Experimental Example 1.1, on the left of FIG. 1B is Example A5, in which no noticeable precipitate is formed, on the right of FIG. 1B is Example A6, confirming that a precipitate is formed at the bottom of a container (white circle), and FIG. 1C shows the results of preparing Example A3, confirming that a precipitate is formed at the bottom of a container (white circle) .

### Best Mode

Hereinafter, the content of the present disclosure will be described in more detail through specific embodiments and examples with reference to the attached drawings. It should be noted that the attached drawings include some, but not all, embodiments of the present disclosure. The content of the present disclosure disclosed herein can be embodied in many different forms and is not limited to the specific embodiments described herein. Such implementations should be viewed as provided to satisfy the legal requirements used herein. The content of the present disclosure disclosed herein is not limited to the specific embodiments described herein, and covers all embodiments falling within the scope of the appended claims.

Additionally, unless otherwise defined, all technical and scientific terms used herein have the same meaning as commonly understood by those skilled in the art to which the present disclosure pertains, and when the terms conflict, the description herein including the definition will take precedence.

The term "snow removal" used for a snow removal composition of the present disclosure encompasses all meanings, such as removing ice, removing snow, preventing freezing, melting snow, melting ice, deicing, and the like, commonly used in the art.

The snow removal composition of the present disclosure can be formed as a solid or liquid. Therefore, such a form of the phase may be determined and used as needed. Hereinafter, the combination and content of each component contained in solid and liquid snow removal compositions presented in the embodiments may differ.

### Characteristics of composition disclosed herein

An aqueous solution composition disclosed herein has outstanding performance in removing ice, removing snow, and preventing freezing, which involves not freezing at extremely low temperatures (-30°C or below), having excellent ice-melting ability, and not refreezing even after melting the ice, and the like. At the same time, the aqueous solution composition contains much less chloride salt than known snow removal compositions in the art and thus is eco-friendly because environmental damage caused by chloride ions occurs much less when used as a snow removal agent.

Typically, the effect of lowering the freezing point of an aqueous solution is known to be proportional to the molality of a solute. Thus, reducing the salt concentration in the composition while achieving an equivalent or higher level of performance in removing snow, removing ice, and/or preventing freezing is technological progress that is not readily apparent to those skilled in the art. The inventors discovered that such an effect was enabled to be achieved by the combination of chloride salt, metasilicic acid or metasilicate, and formic acid or formate in the composition, thereby completing the present disclosure.

The inventors discovered that when combining chloride salt, metasilicic acid or metasilicate, formic acid or formate, and optionally, acetic acid or acetate, physical/chemical changes occurred in an aqueous solution, ultimately affecting the physical properties of the aqueous solution. Specifically, the inventors proved through experiments that when formulating relatively small amounts of metasilicic acid or metasilicate, formic acid or formate, and acetic acid or acetate with chloride, the solubility of chloride in water is significantly lower than that in the case where chloride is present alone (see Experimental Example 2). Furthermore, the inventors found that when combining relatively small amounts of metasilicic acid or metasilicate and formic acid or formate with chloride, excellent performance in preventing freezing was achieved even with extremely low salt concentration (see Experimental Example 5).

Other substances are unlikely to be produced by chemically reacting chloride, metasilicic acid or metasilicate, formic acid or formate, and acetic acid or acetate with each other. Therefore, it is assumed that the compositions described above form a kind of phase equilibrium in an aqueous solution and affect the physical/chemical properties thereof.

As a result, the composition has a low salt concentration and high performance in preventing freezing due to the combination of chloride, metasilicic acid or metasilicate, formic acid or formate, and optionally, acetic acid or acetate.

### Liquid snow removal composition

One aspect herein provides a snow removal composition characterized by including: with respect to the total weight of the composition, a solid content containing 11.000 to 22.000 wt% of a chloride, 0.05 to 0.200 wt% of metasilicic acid or a metasilicate, and 0.050 to 10.000 wt% of formic acid or a formate; and the remainder, other than the solid content, being water.

As used herein, the snow removal composition including the solid content refers to the resulting product prepared by mixing the solid content with water.

The term "solid content" also encompasses the meaning of a substance in which a part or all thereof is present as a solute and dissolved in water.

For example, the snow removal composition may ease concerns about environmental pollution, corrosion, and the like caused by chlorine by having a significantly lower chlorine content than typical snow removal compositions in which a total of 30 wt% or more of chloride is dissolved and may also show excellent ice-removing ability, which involves melting ice at temperatures in a range of about -30°C to - 40°C.

The snow removal composition, including water and the components of the solid content being all water-soluble, may specifically be a snow removal composition in a liquid form.

Such a liquid snow removal composition has excellent dispersibility and fluidity, making it possible to be uniformly sprayed during snow removal work. Even after being sprayed, the reaction speed of melting snow and ice, especially the initial reaction speed, is fast, which is further advantageous during field application. Additionally, this effect may last a long time and create little moisture on the road surface, thereby reducing the risk of secondary traffic accidents caused by refreezing.

Additionally, the composition has various advantages of being hardly affected by moisture due to being present as a liquid, thus being easily stored, and being inexpensive compared to existing snow removal agents, thus being effective in replacing imports.

In one embodiment, the solid content contains the chloride salt, and the chloride salt may include one or more selected from the group consisting of sodium chloride, calcium chloride, magnesium chloride, and potassium chloride. For example, the chloride may be sodium chloride, calcium chloride, or a combination thereof.

The chloride salt content, with respect to the total weight of the composition, may be in a range of 11.000 to 22.000 wt% in one example, 11 to 17.5 wt% in another example, and 11 to 13 wt% in a further example. When the chloride content is less than 11 wt%, the effects of removing snow, removing ice, and preventing freezing may be insufficiently achieved, and when the chloride content exceeds 22 wt%, environmental problems may occur due to an excessive increase in salinity, which is concerning.

In one embodiment, the solid content may contain the metasilicic acid or metasilicate.

The metasilicic acid or metasilicate, configured to show an anti-corrosion effect, may, for example, form an oxide film on the surface of metals or oxidize chloride ions through organic oxidation, thereby preventing the chloride ions from combining with the metals. Additionally, the metasilicic acid or metasilicate plays a role, that is, a pH adjuster, so that the pH of a snow removal agent becomes neutral. The metasilicic acid or metasilicate is easily decomposable in the soil, minimizing environmental pollution and thus being eco-friendly.

The metasilicate may be prepared through neutralization reactions between metasilicic acid and a hydroxide of lithium, sodium, and potassium, Group 1 metals, calcium, a Group 2 metal, or aluminum, a Group 3 metal. Specifically, the metasilicate may include one or more selected from the group consisting of lithium metasilicate, sodium metasilicate, potassium metasilicate, calcium metasilicate, and aluminum metasilicate.

For example, the metasilicate may be sodium metasilicate.

The content of the metasilicic acid or metasilicate, with respect to the total weight of the composition, may be in a range of 0.05 to 0.200 wt% in one example, 0.05 wt% in another example, 0.1 wt% in a further example, or 0.2 wt% in still another example. When the content described above is less than 0.05 wt%, the anti-corrosion effect is insignificant. Even when the content exceeds 0.200 wt%, this does not necessarily mean an increase in the anti-corrosion effect, thus being uneconomical.

In one embodiment, the solid content may contain the formic acid or formate. The formic acid or formate in combination with the metasilicic acid or metasilicate may further promote the anti-corrosion effect. The formate may be prepared through neutralization reactions between formic acid and a hydroxide of lithium, sodium, and potassium, Group 1 metals, calcium, a Group 2 metal, or aluminum, a Group 3 metal. Specifically, the formate may include one or more selected from the group consisting of lithium formate, sodium formate, potassium formate, calcium formate, and aluminum formate.

For example, the formate may be sodium formate.

The content of the formic acid or formate, with respect to the total weight of the composition, may be in a range of 0.05 to 10.000 wt% in one example, 2 to 7 wt% in another example, or 4 to 6.5 wt% in a further example.

In one embodiment, the solid content may contain acetic acid or an acetate. The acetic acid or acetate may serve as a corrosion inhibitor to prevent corrosion of, for example, concrete or asphalt roads, bridges, vehicles, and facility structures even when making contact with the composition.

The acetate may include one or more selected from sodium acetate, potassium acetate, or a combination thereof.

The content of the acetic acid or acetate, with respect to the total weight of the composition, may be in a range of 0.002 to 0.200 wt% in one example or 0.005 to 0.015 wt% in another example. When the content described above is less than 0.002 wt%, the anti-corrosion effect may be insignificant, so when applying the liquid snow removal composition to vehicles or roads, corrosion may occur, and the durability thereof deteriorates. When the content exceeds 0.2 wt%, there may be a problem of rather inhibiting freezing point depression.

In one embodiment, the solid content may further contain glycerin. The glycerin may function as an ice-melting accelerator that helps the chloride serve as an ice-melting agent.

The glycerin content, with respect to the total weight of the composition, may be in a range of 0.001 to 10.000 wt% in one example, 1 to 8 wt% in another example, or 5 to 7.5 wt% in a further example. When the content described above is less than 0.001 wt%, ice melt acceleration hardly functions, and when the content exceeds 10 wt%, the composition may become more acidic and corrosive, which is problematic.

In one embodiment, the composition may include the remainder, other than the solid content, being a solvent, that is, water. The water content, with respect to the total weight of the composition, may be in a range of 57.600 to 88.898 wt% but is not limited thereto.

In one embodiment, the composition may further include a metal hydroxide composed of sodium hydroxide, potassium hydroxide, calcium hydroxide, aluminum hydroxide, or a combination thereof as one component of the solid content to control the hydrogen ion concentration in the composition, especially to adjust the pH to fall within a range of 6 to 13.

In one embodiment, the composition may further include a by-product as the solid content or liquid component (for example, solvent), the by-product generated in the process of preparing and storing a dairy product or sea salt. In particular, cheese brine solution used in the process of producing cheese, a dairy product, may be used, or the resulting solid produced by concentrating the brine solution to remove moisture may be used.

Each content of the metal hydroxide and the by-product, with respect to the total weight of the composition, may be independently in a range of 0.002 to 1 wt% in one example or 0.005 to 0.05 wt% in another example.

A method of preparing the liquid snow removal composition may involve first introducing the components of the solid content, that is, the chloride, the metasilicic acid or metasilicate, and the formic acid or formate within the respective content ranges described above in a mixer or stirrer and then mixing the introduced components for preparation. During the mixing, one or more of the components of the solid content selected from the acetic acid or acetate, glycerin, the metal hydroxide, the by-product, and a combination thereof may be further introduced within the respective content ranges described above, as needed.

Through the mixing, the components of the solid content may be made into a uniform particle (powder) form having a predetermined size. The mixing may be, for example, performed for 5 to 20 minutes. The resulting mixture may be transferred to a sorter where the mixing is completed, thus being classified as a further uniform particle (powder) form to prepare a powder mixture of the solid content.

In this case, such a prepared powder mixture of the solid content may have a spherical or irregular crystal shape with an average diameter, for example, in a range of 0.5 to 10 mm.

Subsequently, the powder mixture of the solid content is dissolved in a solvent, that is, water, and then, for example, stirred at a temperature in a range of 30°C to 50°C, which is specifically in the range of 35°C to 45°C, at a speed in a range of 50 to 1,500 rpm, which is specifically in the range of 100 to 1,000 rpm, thereby preparing the liquid snow removal composition.

In other words, the method of preparing the snow removal composition, according to one embodiment of the present disclosure, involves first formulating the solid content in the liquid composition separately in a powder mixture form, followed by additionally forming the resulting mixture into a liquid, thereby showing the effects of reducing transportation and storage costs.

### Solid snow removal composition

Another aspect herein provides a snow removal composition characterized by including: with respect to the total weight of the composition, 35.032 to 99.081 wt% of a chloride salt; 0.226 to 0.905 wt% of metasilicic acid or a metasilicate; 0.226 to 45.245 wt% of formic acid or a formate; 0.009 to 0.905 wt% of acetic acid or an acetate; and 0.001 to 45.245 wt% of glycerin.

The snow removal composition may be a solid composition free of a solvent, that is, water. In other words, the solid snow removal composition is prepared by combining the components of the solid content that are the same as those in the case of the liquid composition. However, the content of each component may be set differently from that in the case of the liquid composition.

In some cases, the snow removal composition may further include the metal hydroxide and the by-product (solid) described above, each content of which, with respect to the total weight of the composition, may be independently in a range of 0.002 to 1 wt% in one example or 0.005 to 0.05 wt% in another example.

A method of preparing the solid snow removal composition may be performed in the same manner as the method of preparing the liquid snow removal composition described above, up to the step where the powder mixture of the solid content is formulated.

In other words, all the components of the solid content, that is, the chloride, the metasilicic acid or metasilicate, the formic acid or formate, the acetic acid or acetate, and the glycerin, may be introduced into a mixer or stirrer and then mixed for preparation. In this case, during the mixing, one or more of the components of the solid content selected from the metal hydroxide, the by-product, and a combination thereof may be further introduced as needed. In this case, the content of each component of the solid content may fall within the respective content ranges in the solid snow removal composition described above.

Through the mixing, the components of the solid content may be made into a uniform particle (powder) form having a predetermined size. The mixing may be, for example, performed for 5 to 20 minutes. The resulting mixture may be transferred to a sorter where the mixing is completed, thus being classified as a further uniform particle (powder) form to prepare a powder mixture of the solid content.

Optionally, the liquid component may be removed after mixing the solid content to prepare the powder mixture of the solid content.

In this case, such a powder mixture of the solid content may be prepared as a spherical with an average diameter, for example, in a range of 0.5 to 10 mm, or irregular crystal shape.

### Possible embodiments

Hereinafter, possible embodiments of the present disclosure provided herein are to be listed. The following embodiments provided herein are merely examples of the present disclosure. Therefore, the present disclosure provided herein is not to be interpreted as limited to the following embodiments. The brief descriptions provided along with the example number are only for the convenience of distinguishing between each example and are not to be construed as a limitation on the present disclosure disclosed herein.

### Reference to numerical ranges

As used herein, the term "about" refers to an amount, level, value, number, frequency, percent, dimension, size, amount, weight, or length that varies by 30%, 25%, 20%, 15%, 10%, 9%, 8%, 7%, 6%, 5%, 4%, 3%, 2%, 1%, or 0% with respect to a reference amount, level, value, number, frequency, percent, dimension, size, amount, weight, or length.

### Liquid composition

### Embodiment 1, Aqueous solution composition

A composition including:
water;
a chloride salt;
a first additive agent including at least one selected from metasilicic acid, and a metasilicate,; and
a second additive agent including at least one selected from formic acid, and a formate,
wherein the composition does not freeze in the following temperature ranges:
(a1) A1°C, where A1 is a real number of -40 or greater and -15 or less (for example, -30°C);
(a2) A2₁°C or above and A2₂°C or below, where A2₁ and A2₂ are each independently real numbers of -40 or greater and -15 or less, and A2₂ is greater than A2₁ (for example, -40°C or above and -20°C or below);
(a3) A3°C or above, where A3 is a real number of -40 or greater and -15 or less (for example, -40°C or above); and
(a4) A4°C or below, where A4 is a real number of -40 or greater and -15 or less (for example, -15°C or below).

### Embodiment 2, Ice-removing ability

In Embodiment 1, the composition has an ice-melting ability and/or an anti-recrystallization ability in a temperature range selected from:
(b1) B1°C, where B1 is a real number of -40 or greater and 0 or less (for example, -30°C);
(b2) B2₁°C or above and B2₂°C or below, where B2₁ and B2₂ are each independently real numbers of -40 or greater and 0 or less, and B2₂ is greater than B2₁ (for example, 0°C or below and -15°C or above);
(b3) B3°C or above, where B3 is a real number of -40 or greater and 0 or less (for example, -40°C or above); and
(b4) B4°C or below, where B4 is a real number of -40 or greater and 0 or less (for example, 0°C or below).

### Embodiment 3, Limitation in chloride

In Embodiment 1 or 2, the chloride includes at least one selected from sodium chloride, calcium chloride, magnesium chloride, and potassium chloride.

### Embodiment 4, Limitation in molar concentration of chlorine

In any one of Embodiments 1 to 3, the molar concentration of chloride salt in the composition is selected from:
(c1) C1 mol/L, where C1 is a real number of 1.6 or greater and 7.1 or less (for example, 2.4 mol/L);
(c2) at least C2₁ mol/L and not more than C2₂ mol/L or less, where C2₁ and C2₂ are each independently real numbers of 1.6 or greater and 7.1 or less, and C2₂ is greater than C2₁ (for example, at least 2.4 mol/L and not more than 5.5 mol/L);
(c3) not more than C3 mol/L, where C3 is a real number of 1.6 or greater and 7.1 or less (for example, at least 1.6 mol/L); and
(c4) at least C4 mol/L, where C4 is a real number of 1.6 or greater and 7.1 or less (for example, not more than 7.1 mol/L).

### Embodiment 5, Exemplification of molar concentration of chlorine

In Embodiment 4, the molar concentration of the chloride salt in the composition is selected from:

at least 5.3 mol/L and not more than 5.8 mol/L; at least 2.4 mol/L and not more than 4.8 mol/L or less; at least 1.8 mol/L and not more than 3.5 mol/L; and at least 1.6 mol/L and not more than 7.1 mol/L.

### Embodiment 6, Limitation in molality

In any one of Embodiments 1 to 5, the molality of the chloride salt in the composition is selected from:
(d1) D1 mol/kg, where D1 is a real number of 1.6 or greater and 8.1 or less (for example, 2.4 mol/kg);
(d2) at least D2₁ mol/kg and not more than D2₂ mol/kg, where D2₁ and D2₂ are each independently real numbers of 1.6 or greater and 8.1 or less, and D2₂ is greater than D2₁ (for example, at least 2.4 mol/kg and not more than 5.5 mol/kg);
(d3) not more than D3 mol/kg, where D3 is a real number of 1.6 or greater and 8.1 or less (for example, at least 1.6 mol/kg); and
(d4) at least D4 mol/kg, where D4 is a real number of 1.6 or greater and 8.1 or less (for example, not more than 8.1 mol/kg).

### Embodiment 7, Exemplification of molality

In any one of Embodiments 1 to 6, the molality of the chloride salt in the composition is selected from:
at least 4.9 mol/kg and not more than 5.5 mol/kg; at least 2.6 mol/kg and not more than 4.1 mol/kg; at least 1.8 mol/kg and not more than 3.9 mol/kg; and at least 1.6 mol/kg and not more than 8.1 mol/kg.

### Embodiment 8, Limitation in metasilicate

In any one of Embodiments 1 to 7, the metasilicate includes at least one selected from lithium metasilicate, sodium metasilicate, potassium metasilicate, calcium metasilicate, and aluminum metasilicate.

### Embodiment 9, Limitation in molar concentration of first additive agent

In any one of Embodiments 1 to 8, the concentration of the first additive agent is selected from:
assuming that the salt is formed by the ionic bonding of all the metasilicate-derived ions, based on the volume of the composition,
(e1) E1 mol/L, where E1 is a real number of 0.002 or greater and 0.035 or less (for example, 2.4 mol/L);
(e2) at least E2₁ mol/L and not more than E2₂, where E2₁ and E2₂ are each independently real numbers of 0.002 or greater and 0.035 or less, and E2₂ is greater than E2₁ (for example, at least 0.005 mol/L and not more than 0.025 mol/L);
(e3) not more than E3 mol/L, where E3 is a real number of 0.002 or greater and 0.035 or less (for example, at least 0.002 mol/L); and
(e4) at least E4 mol/L, where E4 is a real number of 0.002 or greater and 0.035 or less (for example, not more than 0.035 mol/L).

### Embodiment 10, Limitation in molality of first additive agent

In any one of Embodiments 1 to 9, the concentration of the first additive agent is selected from:
assuming that the salt is formed by the ionic bonding of all the metasilicate-derived ions, based on the mass of the solvent in the composition,
(f1) F1 mol/kg, where F1 is a real number of 0.003 or greater and 0.035 or less (for example, 0.023 mol/kg);
(f2) at least F2₁ mol/kg and not more than F2₂ mol/kg, where F2₁ and F2₂ are each independently real numbers of 0.003 or greater and 0.035 or less, and F2₂ is greater than F2₁ (for example, at least 0.005 mol/kg and not more than 0.025 mol/kg);
(f3) not more than F3 mol/kg, where F3 is a real number of 0.003 or greater and 0.035 or less (for example, at least 0.003 mol/kg); and
(f4) at least F4 mol/kg, where F4 is a real number of 0.003 or greater and 0.035 or less (for example, not more than 0.035 mol/kg).

### Embodiment 11, Limitation in Formate

In any one of Embodiments 1 to 10, the formate includes at least one selected from lithium formate, sodium formate, potassium formate, calcium formate, and aluminum formate.

### Embodiment 12, Limitation in molar concentration of second additive agent

In any one of Embodiments 1 to 11, the concentration of the second additive agent is selected from: assuming that the salt is formed by the ionic bonding of all the formate-derived ions, based on the volume of the composition,
(g1) G1 mol/L, where G1 is a real number of 0.003 or greater and 2.94 or less (for example, 0.861 mol/L);
(g2) at least G2₁ mol/L and not more than G2₂ mol/L, where G2₁ and G2₂ are each independently real numbers of 0.003 or greater and 2.94 or less, and G2₂ is greater than G2₁ (for example, at least 0.009 mol/L and not more than 2.156 mol/L);
(g3) not more than G3 mol/L, where G3 is a real number of 0.003 or greater and 2.94 or less (for example, at least 0.003 mol/L or more); and
(g4) at least G4 mol/L, where G4 is a real number of 0.003 or greater and 2.94 or less (for example, not more than 2.94 mol/L) .

### Embodiment 13, Limitation in molality of second additive agent

In any one of Embodiments 1 to 12, the concentration of the second additive agent is selected from: assuming that the salt is formed by the ionic bonding of all the formate-derived ions, based on the mass of the solvent in the composition,
(h1) H1 mol/kg, where H1 is a real number of 0.003 or greater and 3.35 or less (for example, 0.921 mol/kg);
(h2) at least H2₁ mol/kg and not more than H2₂ mol/kg, where H2₁ and H2₂ are each independently real numbers of 0.003 or greater and 3.35 or less, and H2₂ is greater than H2₁ (for example, at least 0.011 mol/kg and not more than 2.156 mol/kg);
(h3) not more than H3 mol/kg, where H3 is a real number of 0.003 or greater and 3.35 or less (for example, at least 0.003 mol/kg); and
(h4) at least H4 mol/kg, where H4 is a real number of 0.003 or greater and 3.35 or less (for example, not more than 3.35 mol/kg).

### Embodiment 14, Addition of third additive agent

In any one of Embodiments 1 to 13, the composition further includes a third additive agent including at least one selected from acetic acid, an acetate, and acetate-derived ions.

### Embodiment 15, Limitation in acetate

In Embodiment 13 or 14, the acetate includes at least one selected from sodium acetate and potassium acetate.

### Embodiment 16, Limitation in molar concentration of third additive agent

In any one of Embodiments 13 to 15, the concentration of the third additive agent is selected from: assuming that the salt is formed by the ionic bonding of all the acetate-derived ions, based on the volume of the composition,
(i1) I1 mol/L, where I1 is a real number of 0.0003 or greater and 0.051 or less (for example, 0.00178 mol/L);
(i2) at least I2₁ mol/L and not more than I2₂ mol/L, where I2₁ and I2₂ are each independently real numbers of 0.0003 or greater and 0.051 or less, and I2₂ is greater than I2₁ (for example, at least 0.001 mol/L and not more than 0.003 mol/L);
(i3) not more than I3 mol/L, where I3 is a real number of 0.0003 or greater and 0.051 or less (for example, at least 0.0003 mol/L); and
(i4) at least I4 mol/L, where I4 is a real number of 0.0003 or greater and 0.051 or less (for example, not more than 0.051 mol/L).

### Embodiment 17, Limitation in molality of third additive agent

In any one of Embodiments 1 to 16, the concentration of the third additive agent is selected from: assuming that the salt is formed by the ionic bonding of all the formate-derived ions, based on the mass of the solvent in the composition,
(j1) J1 mol/kg, where J1 is a real number of 0.0003 or greater and 0.06 or less (for example, 0.00178 mol/kg);
(j2) at least J2₁ mol/kg and not more than J2₂ mol/kg, where J2₁ and J2₂ are each independently real numbers of 0.0003 or greater and 0.06 or less, and J2₂ is greater than J2₁ (for example, at least 0.001 mol/kg and not more than 0.003 mol/kg);
(j3) not more than J3 mol/kg, where J3 is a real number of 0.0003 or greater and 0.06 or less (for example, at least 0.0003 mol/kg); and
(j4) at least J4 mol/kg, where J4 is a real number of 0.0003 or greater and 0.06 or less (for example, not more than 0.06 mol/kg).

### Embodiment 18, Addition of glycerin

In any one of Embodiments 1 to 17, the composition further includes glycerin.

### Embodiment 19, Limitation in molar concentration of glycerin

In any one of Embodiments 1 to 18, the concentration of glycerin is selected from, based on the volume of the composition:
(k1) K1 mol/L, where K1 is a real number of 0.00008 or greater and 1.85 or less (for example, 0.892 mol/L);
(k2) at least K2₁ mol/L and not more than K2₂ mol/L, where K2₁ and K2₂ are each independently real numbers of 0.00008 or greater and 1.85 or less, and K2₂ is greater than K2₁ (for example, at least 0.00008 mol/L and not more than 1.82 mol/L or less);
(k3) not more than K3 mol/L, where K3 is a real number of 0.00008 or greater and 1.85 or less (for example, at least 0.00008 mol/L); and
(k4) at least K4 mol/L, where K4 is a real number of 0.00008 or greater and 1.85 or less (for example, not more than 1.85 mol/L).

### Embodiment 20, Limitation in molality of glycerin

In any one of Embodiments 1 to 19, the concentration of glycerin is selected from, based on the mass of the solvent in the composition:
(l1) L1 mol/kg, where L1 is a real number of 0.00008 or greater and 2.1 or less (for example, 0.00178 mol/kg);
(l2) at least L2₁ mol/kg and not more than L2₂ mol/kg, where L2₁ and L2₂ are each independently real numbers of 0.00008 or greater and 2.1 or less, and L2₂ is greater than L2₁ (for example, at least 0.00008 mol/kg and not more than 2.1 mol/kg);
(l3) not more than L3 mol/kg, where L3 is a real number of 0.00008 or greater and 2.1 or less (for example, at least 0.00008 mol/kg); and
(l4) at least L4 mol/kg, where L4 is a real number of 0.00008 or greater and 2.1 or less (for example, not more than 2.1 mol/kg).

### Embodiment 21, Relative value of concentration of first additive agent to concentration of chloride ions

In any one of Embodiments 1 to 20, the concentration of the first additive agent is 0.1% or less, 0.2% or less, 0.3% or less, 0.4% or less, 0.5% or less, 0.6% or less, 0.7% or less, 0.8% or less, 0.9% or less, 1.0% or less, 1.1% or less, 1.2% or less, 1.3% or less, 1.4% or less, 1.5% or less, 1.6% or less, 1.7% or less, 1.8% or less, 1.9% or less, or 2.0% or less of the concentration of the chloride ions in the composition.

### Embodiment 22, Relative value of concentration of second additive agent to concentration of chloride ions

In any one of Embodiments 1 to 21, the concentration of the second additive agent is 1% or less, 2% or less, 3% or less, 4% or less, 5% or less, 6% or less, 7% or less, 8% or less, 9% or less, 10% or less, 11% or less, 12% or less, 13% or less, 14% or less, 15% or less, 16% or less, 17% or less, 18% or less, 19% or less, 20% or less, 21% or less, 22% or less, 23% or less, 24% or less, 25% or less, 26% or less, 27% or less, 28% or less, 29% or less, 30% or less, 31% or less, 32% or less, 33% or less, 34% or less, 35% or less, 36% or less, 37% or less, 38% or less, 39% or less, 40% or less, 41% or less, 42% or less, 43% or less, 44% or less, 45% or less, 46% or less, 47% or less, 48% or less, 49% or less, or 50% or less of the concentration of the chloride ions in the composition.

### Embodiment 23, Relative value of concentration of third additive agent to concentration of chloride ions

In any one of Embodiments 1 to 22, the concentration of the third additive agent is 0.1% or less, 0.2% or less, 0.3% or less, 0.4% or less, 0.5% or less, 0.6% or less, 0.7% or less, 0.8% or less, 0.9% or less, or 1.0% or less of the concentration of the chloride ions in the composition.

### Embodiment 24, Relative value of concentration of glycerin to concentration of chloride salt

In any one of Embodiments 1 to 23, the concentration of glycerin is 1% or less, 2% or less, 3% or less, 4% or less, 5% or less, 6% or less, 7% or less, 8% or less, 9% or less, 10% or less, 11% or less, 12% or less, 13% or less, 14% or less, 15% or less, 16% or less, 17% or less, 18% or less, 19% or less, 20% or less, 21% or less, 22% or less, 23% or less, 24% or less, 25% or less, 26% or less, 27% or less, 28% or less, 29% or less, 30% or less, 31% or less, 32% or less, 33% or less, 34% or less, 35% or less, 36% or less, 37% or less, 38% or less, 39% or less, 40% or less, 41% or less, 42% or less, 43% or less, 44% or less, 45% or less, 46% or less, 47% or less, 48% or less, 49% or less, 50% or less, 51% or less, 52% or less, 53% or less, 54% or less, or 55% or less of the concentration of the chloride salt in the composition.

### Use of liquid composition

### Embodiment 25, Use of liquid composition

A liquid composition for removing snow, removing ice, preventing freezing, melting snow, melting ice, and/or deicing, the composition including any one of the compositions selected from Embodiments 1 to 24.

### Mode for Invention

Hereinafter, the present disclosure provided herein will be described in more detail through experimental examples and examples. These examples are only for illustrating the content disclosed herein, and it is apparent that the scope of the content disclosed herein should not be construed as limited by these examples.

### Experimental Example 1. Experimental materials and methods

### Experimental Example 1.1. Examples used for experiments

### Examples 1 to 7

Anti-freezing compositions of Examples 1 to 7 and Comparative Examples 1 to 5 were prepared according to the compositions shown in Table 1 below. The molar concentrations of the main components in each example were calculated and listed in Table 2 below.

**[Table 1]**

| Label | NaCl (wt%) | CaCl2 (wt%) | Sodium metasilicate (wt%) | Sodium formate (wt%) | Glycerin (wt%) | Water (wt%) | Total (wt%) |
|---|---|---|---|---|---|---|---|
| Example 1 | 21.60 | - | 0.20 | 4.50 | - | 73.70 | 100 |
| Example 2 | 21.60 | - | 0.20 | 4.50 | - | 73.70 | 100 |
| Example 3 | 21.60 | - | 0.20 | 4.50 | - | 73.70 | 100 |
| Example 4 | 21.60 | - | 0.20 | 4.50 | 10.00 | 63.70 | 100 |
| Example 5 | 21.60 | - | 0.20 | 0.05 | - | 78.15 | 100 |
| Example 6 | 21.60 | - | 0.20 | 10.00 | - | 68.20 | 100 |
| Example 7 | 21.60 | - | 0.05 | 4.50 | - | 73.85 | 100 |
| Comparative Example 1 | 30.00 | - | - | - | - | 70.00 | 100 |
| Comparative Example 2 | - | 30.00 | - | - | - | 70.00 | 100 |
| Comparative Example 3 | 21.60 | - | 0.20 | - | - | 78.20 | 100 |
| Comparative Example 4 | 21.60 | - | - | 4.50 | 5.00 | 68.90 | 100 |
| Comparative Example 5 | 21.60 | - | - | - | 10.00 | 68.40 | 100 |

**[Table 2]**

| Label | Cl contents (M) | Sodium metasilicate (M) | Sodium formate (M) | Glycerin (M) |
|---|---|---|---|---|
| Example 1 | 5.34 | 0.0222 | 0.42 | 0.00 |
| Example 2 | 5.34 | 0.0222 | 0.42 | 0.00 |
| Example 3 | 5.34 | 0.0222 | 0.42 | 0.00 |
| Example 4 | 5.49 | 0.0229 | 0.44 | 1.37 |
| Example 5 | 5.04 | 0.0210 | 0.00 | 0.00 |
| Example 6 | 5.77 | 0.0240 | 0.95 | 0.00 |
| Example 7 | 5.33 | 0.0055 | 0.42 | 0.00 |
| Comparative Example 1 | 7.81 | 0.0000 | 0.00 | 0.00 |
| Comparative Example 2 | 7.72 | 0.0000 | 0.00 | 0.00 |
| Comparative Example 3 | 5.03 | 0.0210 | 0.00 | 0.00 |
| Comparative Example 4 | 5.40 | 0.0000 | 0.43 | 0.68 |
| Comparative Example 5 | 5.16 | 0.0000 | 0.00 | 1.37 |

### Examples 8 to 15

Anti-freezing compositions of Examples 8 to 15 were prepared according to the compositions shown in Table 3 below. The molar concentrations of the main components in each example were calculated and listed in Table 4 below.

**[Table 3]**

| Label | NaCl (wt%) | CaCl2 (wt%) | Sodium metasilicate (wt%) | Sodium formate (wt%) | Glycerin (wt%) | Acetic acid (wt%) | Water (wt%) | Total (wt%) |
|---|---|---|---|---|---|---|---|---|
| Example 8 | 17.021 | 0.107 | 0.200 | 4.500 | 6.315 | 0.011 | 71.846 | 100 |
| Example 9 | 17.021 | 0.107 | 0.200 | 4.500 | 1.263 | 0.011 | 76.898 | 100 |
| Example 10 | 17.021 | 0.107 | 0.200 | 4.500 | 12.630 | 0.011 | 65.531 | 100 |
| Example 11 | 17.021 | 0.107 | 0.200 | 2.000 | 6.315 | 0.011 | 74.346 | 100 |
| Example 12 | 17.021 | 0.107 | 0.200 | 7.000 | 6.315 | 0.011 | 69.346 | 100 |
| Example 13 | 17.021 | 0.107 | 0.050 | 4.500 | 6.315 | 0.011 | 71.996 | 100 |
| Example 14 | 17.021 | 0.107 | 0.100 | 6.315 | 6.315 | 0.011 | 70.131 | 100 |
| Example 15 | 11.350 | 0.072 | 0.200 | 6.315 | 6.315 | 0.008 | 75.740 | 100 |

**[Table 4]**

| Label | Cl contents (M) | Sodium metasilicate (M) | Sodium formate (M) | Glycerin (M) | Acetic acid (M) |
|---|---|---|---|---|---|
| Example 8 | 4.06 | 0.0213 | 0.861 | 1.368 | 0.00155 |
| Example 9 | 4.01 | 0.0210 | 0.849 | 0.270 | 0.00153 |
| Example 10 | 4.13 | 0.0217 | 0.876 | 2.784 | 0.00158 |
| Example 11 | 3.93 | 0.0206 | 0.371 | 1.325 | 0.00151 |
| Example 12 | 4.20 | 0.0220 | 1.384 | 1.414 | 0.00161 |
| Example 13 | 4.05 | 0.0053 | 0.859 | 1.366 | 0.00155 |
| Example 14 | 4.15 | 0.0109 | 1.236 | 1.399 | 0.00159 |
| Example 15 | 2.58 | 0.0203 | 1.150 | 1.302 | 0.00108 |

### Examples A1 to A6

Anti-freezing compositions of Examples A1 to A6 were prepared according to the compositions shown in Table 5 below. In this case, Comparative Examples 6 and 7 are a 30% NaCl solution and a 30% CaCl2 solution, respectively. The molar concentrations of the main components in each example were calculated and listed in Table 6 below.

**[Table 5]**

| Label | NaCl (g) | CaCl2 (g) | Sodium metasilicate (wt%) | Sodium formate (wt%) | Glycerin (wt%) | Acetic acid (wt%) | Final Solution (mL) |
|---|---|---|---|---|---|---|---|
| A1 | 60.638 | 0.510 | 0.150 | 0.150 | 0.002 | 0.032 | 300.000 |
| A2 | 60.638 | 0.510 | 0.600 | 30.000 | 23.810 | 0.032 | 300.000 |
| A3 | 60.638 | 0.510 | 0.600 | 13.500 | 2.381 | 0.032 | 300.000 |
| A4 | 60.638 | 0.510 | 0.600 | 13.500 | 14.286 | 0.032 | 300.000 |
| A5 | 34.050 | - | 0.600 | 18.945 | - | - | 300.000 |
| A6 | 32.340 | 0.272 | 0.600 | 18.945 | - | 0.017 | 300.000 |
| Comparative Example 6 | 128.571 | - | - | - | - | - | 300.000 |
| Comparative Example 7 | - | 128.571 | - | - | - | - | 300.000 |

**[Table 6]**

| Label | Cl contents (M) | Sodium metasilicate (M) | Sodium formate (M) | Glycerin (M) | Acetic acid (M) |
|---|---|---|---|---|---|
| A1 | 3.489 | 0.00123 | 0.00221 | 0.0000862 | 0.000534 |
| A2 | 3.489 | 0.00492 | 0.441 | 0.862 | 0.000534 |
| A3 | 3.489 | 0.00492 | 0.199 | 0.0862 | 0.000534 |
| A4 | 3.489 | 0.00492 | 0.199 | 0.517 | 0.000534 |
| A5 | 1.942 | 0.00492 | 0.279 | - | - |
| A6 | 1.861 | 0.00492 | 0.279 | - | 0.000285 |
| Comparative Example 6 | 7.333 | - | - | - | - |
| Comparative Example 7 | 7.723 | - | - | - | - |

### Experimental Example 1.2. Confirmation of chloride precipitate formation depending on formulations in examples

When preparing the examples according to Table 3, whether precipitates were formed was visually confirmed to determine whether the solubility of the chloride is affected depending on the combination of each substance.

### Experimental Example 1.3. Measurement method of performance in preventing freezing

A 100 mL bottle with a lid was filled with 50 mL of each of the compositions of the examples and comparative examples, according to Experimental Example 1.1. Next, the bottle was sealed with the lid and then placed in a freezer set to -30°C, followed by visually reading whether freezing occurred or not at intervals of 30 minutes, 60 minutes, 90 minutes, and 24 hours. The time (hr) required for each composition to freeze was recorded.

### Experimental Example 1.4. Evaluation method of time required to melt ice

A 10-g capacity silicone mold was filled with 10 mL of purified water and frozen to -30°C for 2 days to prepare ice. Next, 80 mL of each of the compositions of the examples and comparative examples, according to Experimental Example 1.1, was put into a 100 mL bottle with a lid. After introducing the ice prepared earlier into the bottle block by block, the bottle was placed in a freezer set to -30°C, followed by visually confirming whether the introduced ice was melted (ice melt). The time required to melt ice completely was recorded.

### Experimental Example 1.5. Test method of chlorine content evaluation

Colum: Shodex IC SI-35 4D (4.0 mm I.D. x 150 mm)
Column temperature: 45°C
Mobile phase: 3 mM Na2CO3 aqueous solution
Flow rate: 0.6 ml/min
Detector: suppressed conductivity detector
Injection volume: 50 µL
Measuring equipment: Alliance (Waters)

A 10 mL volumetric flask was filled with 0.25 mL of each of the compositions of the examples and comparative examples, according to Experimental Example 1.1, followed by adding the mobile phase to fill up to the calibration mark. After mixing the resulting solutions well, 0.5 mL of each solution was put into a 10 mL volumetric flask, followed by adding the mobile phase to fill up to the calibration mark. After mixing the resulting solution well, analysis was performed by the analysis method described above.

### Experimental Example 1.6. Experimental method of ice-melting ability evaluation and recrystallization test at extremely low temperatures

This experiment intends to evaluate the ice-melting ability and test recrystallization of the composition at extremely low temperatures (-30°C).

A 10-g capacity silicone mold was filled with 10 mL of ultrapure water and then frozen at -30°C for 1 day. Then, 100 mL of the composition was put into a 100 mL media bottle. Next, ice was soaked in the composition and placed in a freezer at -30°C. The ice was taken out and checked frequently until the ice completely melted.

### Experimental Example 1.7. Evaluation of amount of ice melt

A 100-g capacity silicone mold was filled with 100 mL of ultrapure water and then frozen at -30°C for 1 day. Then, 100 mL of the composition was placed in a 500 mL beaker. The ice was soaked in the composition after measuring the weight thereof and then placed in a freezer at -15°C. The beaker was taken out every 15, 30, and 60 minutes to measure the weight of the ice, thereby determining the amount of ice melt.

### Experimental Example 2. Solubility evaluation experiment depending on formulation of chloride, metasilicate, formate, and/or glycerin

Using the compositions of Comparative Examples 1 to 2 and Examples A1 to A6 according to Experimental Example 1.1, an experiment was performed according to Experimental Example 1.2 to confirm whether chloride precipitates were formed.

The experimental results are shown in FIG. 1.

As a result of the experiment, it was confirmed that the chloride in the composition was precipitated by the metasilicate, the formate, and/or glycerin contained in relatively small amounts. In contrast, there were no precipitates when the 30% NaCl and 30% CaCl2 solutions were prepared in Comparative Examples 6 and 7, respectively. This shows that the combination of the substances in the composition disclosed herein affects the solubility of the chloride in water and, specifically, is effective in reducing the solubility of the chloride. Therefore, the composition disclosed herein may show stable performance in preventing freezing and melting ice despite having a significantly low chloride concentration relative to existing deicing compositions disclosed in the related art.

### Experimental Example 3. Experiment on preventing freezing

Using the compositions of Comparative Examples 1 to 5 and Examples 1 to 7 according to Experimental Example 1.1, the performance in preventing freezing was measured according to Experimental Example 1.3. The experimental results are shown in Table 7 below.

**[Table 7]**

| Label | Time required for freezing (hr) |
|---|---|
| Example 1 | 24 hr or longer |
| Example 2 | 24 hr or longer |
| Example 3 | 24 hr or longer |
| Example 4 | 24 hr or longer |
| Example 5 | 24 hr or longer |
| Example 6 | After 1.5 hr |
| Example 7 | After 1.5 hr |
| Comparative Example 1 | After 1.5 hr |
| Comparative Example 2 | After 1.5 hr |
| Comparative Example 3 | Less than 1.5 hr |
| Comparative Example 4 | Less than 1.5 hr |
| Comparative Example 5 | Less than 1.5 hr |

### Experimental Example 4. Evaluation of time required to melt ice and chlorine content evaluation

Using the compositions of Comparative Example 2 and Examples 8 to 15 according to Experimental Example 1.1, the time required to melt ice was measured according to Experimental Example 1.4. The experimental results are shown in Table 8 below.

**[Table 8]**

| Label | Time required to melt ice (min) |
|---|---|
| Example 8 | 51 |
| Example 9 | 48 |
| Example 10 | 48 |
| Example 11 | 53 |
| Example 12 | 39 |
| Example 13 | 49 |
| Example 14 | 49 |
| Example 15 | 49 |
| Comparative Example 2 | 50 |

Using the compositions of Comparative Example 2 and Examples 3, 8, and 15 according to Experimental Example 1.1, the chlorine content was evaluated according to Experimental Example 1.5. The experimental results are shown in Table 9 below.

**[Table 9]**

| Label | Measurement value of Cl concentration (g/L) | Measurement value of Cl concentration (M) |
|---|---|---|
| Example 3 | 167.16 | 4.715 |
| Example 8 | 129.98 | 3.667 |
| Example 9 | 126.86 | 3.578 |
| Example 10 | 124.49 | 3.512 |
| Example 11 | 127.73 | 3.603 |
| Example 12 | 127.11 | 3.586 |
| Example 13 | 134.66 | 3.798 |
| Example 14 | 133.65 | 3.770 |
| Example 15 | 88.26 | 2.490 |
| Comparative Example 2 | 277.93 | 7.840 |

The chlorine content is a value measured based on the volume of the composition.

### Experimental Example 5. Evaluation of time required to melt ice and recrystallization test

Using the compositions of Comparative Examples 3 to 4 and Examples A1 to A6 according to Experimental Example 1.1, the evaluation of time required to melt ice and recrystallization test were performed according to Experimental Example 1.6.

The experimental results are shown in Table 10 below.

**[Table 10]**

| Label | Time required to melt ice (min) |
|---|---|
| A1 | 34 |
| A2 | 30 |
| A3 | 30 |
| A4 | 30 |
| A5 | 33 |
| A6 | 36 |
| Comparative Example 1 | 25 |
| Comparative Example 2 | 30 |

As a result of the experiment, in the case of Examples A1 to A6, 10 g of ice completely melted within 30 minutes, and even after melting, the ice did not refreeze at -30°C.

### Experimental Example 6. Evaluation of amount of ice melt

Using the compositions of Comparative Examples 6 to 7 and Examples A1 to A6 according to Experimental Example 1.1, the amount of ice melt was evaluated according to Experimental Example 1.7.

The experimental results are shown in Table 11 below.

**[Table 11]**

| Label | 15 min (g) | 30 min (g) | 60 min (g) | Total (g) |
|---|---|---|---|---|
| A2 | 19.12 | 8.62 | 12.02 | 39.76 |
| A3 | 24.66 | 5.95 | 4.49 | 35.10 |
| A4 | 17.91 | 9.61 | 2.58 | 30.10 |
| Comparative Example 6 | 24.38 | 9.47 | 3.88 | 37.73 |
| Comparative Example 7 | 17.89 | 5.69 | 0.45 | 24.03 |

As a result of the experiment, Examples A2 to A4 showed an equivalent or higher amount of ice melt than Comparative Examples 1 and 2 and did not refreeze at -15°C.

### Industrial Applicability

The present disclosure may provide a snow removal composition having as little chloride content as possible to be further eco-friendly and economical while being capable of showing an equal or superior snow removal ability to that of existing snow removal agents having a chloride content of 85% or more based on the weight of solid content.

Therefore, according to the present disclosure, there are advantages of extending not only the lifespan of vehicles, rebar, and steel structures but also the lifespan of roads, bridges, and facility structures by exhibiting excellent metal corrosion resistance. In addition to the advantages of minimizing water pollution and soil acidification as well as achieving excellent eco-friendliness by not causing damage to animals and plants, prices may be lower, enabling wider commercialization.

## Claims

1. An aqueous solution composition comprising:
water;
a chloride salt ;
a first additive agent one or more selected from a group consisting of metasilicate, and metasilicate salt; and
a second additive agent one or more selected from a group consisting of formic acid, and formate;
wherein the aqueous solution composition does not freeze at temperatures above -30°C,
wherein the molar concentration of chloride salt in the aqueous solution composition is at least 2.4 mol/L and not more than 5.5 mol/L,
wherein the molar concentration of the first additive agent is 3% or less of the molar concentration of the chloride salt,
wherein the molar concentration of the second additive agent is 50% or less of the molar concentration of the chloride salt.

2. The aqueous solution composition of claim 1, wherein the chloride salt is at least one selected from sodium chloride and calcium chloride.

3. The aqueous solution composition of any one of the claims 1 to 2,
wherein the first additive agent is sodium metasilicate.

4. The aqueous solution composition of any one of the claims 1 to 3,
wherein the second additive agent is sodium formate.

5. The aqueous solution composition of any one of claims 1 to 4,
wherein the aqueous solution composition further comprises glycerine,
wherein the molar concentration of the glycerine is at least 2 mol/L and not more than 25 mol/L.

6. The aqueous solution composition of any one of claims 1 to 5,
wherein the aqueous solution composition further comprises one or more selected from acetic acid, and acetate as a third additive agent,
wherein the molar concentration of the third additive agent is 0.1% or less of the molar concentration of the chloride salt.

## Patentansprüche

1. Wässrige Lösungszusammensetzung, umfassend:
Wasser;
ein Chloridsalz;
ein erstes Additiv, von dem eines oder mehrere aus der Gruppe ausgewählt sind, die aus Metasilikat und einem Metasilikatsalz besteht; und
ein zweites Additiv, von dem eines oder mehrere aus der Gruppe ausgewählt sind, die aus Ameisensäure und Formiat besteht;
wobei die wässrige Lösungszusammensetzung bei Temperaturen oberhalb von -30°C nicht gefriert,
wobei die Stoffmengenkonzentration des Chloridsalzes in der wässrigen Lösungszusammensetzung wenigstens 2,4 mol/l und nicht mehr als 5,5 mol/l beträgt,
wobei die Stoffmengenkonzentration des ersten Additivs 3% oder weniger der Stoffmengenkonzentration des Chloridsalzes beträgt,
wobei die Stoffmengenkonzentration des zweiten Additivs 50% oder weniger der Stoffmengenkonzentration des Chloridsalzes beträgt.

2. Wässrige Lösungszusammensetzung gemäß Anspruch 1, wobei das Chloridsalz wenigstens eines ist, das aus Natriumchlorid und Calciumchlorid ausgewählt ist.

3. Wässrige Lösungszusammensetzung gemäß einem der Ansprüche 1 bis 2,
wobei es sich bei dem ersten Additiv um Natriummetasilikat handelt.

4. Wässrige Lösungszusammensetzung gemäß einem der Ansprüche 1 bis 3,
wobei es sich bei dem zweiten Additiv um Natriumformiat handelt.

5. Wässrige Lösungszusammensetzung gemäß einem der Ansprüche 1 bis 4,
wobei die wässrige Lösungszusammensetzung weiterhin Glycerin umfasst,
wobei die Stoffmengenkonzentration des Glycerins wenigstens 2 mol/l und nicht mehr als 25 mol/l beträgt.

6. Wässrige Lösungszusammensetzung gemäß einem der Ansprüche 1 bis 5,
wobei die wässrige Lösungszusammensetzung weiterhin eines oder mehrere, die aus Essigsäure und Acetat ausgewählt sind, als drittes Additiv umfasst,
wobei die Stoffmengenkonzentration des dritten Additivs 0,1% oder weniger der Stoffmengenkonzentration des Chloridsalzes beträgt.

## Revendications

1. Composition aqueuse, comprenant :
de l'eau ;
un sel de chlorure ;
un premier additif comprenant un ou plusieurs composés choisis dans un groupe consistant en métasilicate et un sel de métasilicate ; et
un deuxième additif comprenant un ou plusieurs composés choisis dans un groupe consistant en acide formique et des formiates ;
dans laquelle ladite composition aqueusene gèle pas à des températures supérieures à -30 °C,
dans laquelle la concentration molaire du sel de chlorure dans la composition aqueuseest d'au moins 2,4 mol/l et d'au plus 5,5 mol/l,
dans laquelle la concentration molaire du premier additif est 3 % ou moins de la concentration molaire du sel de chlorure,
dans laquelle la concentration molaire du deuxième additif est 50 % ou moins de la concentration molaire du sel de chlorure.

2. Composition aqueuseselon la revendication 1, dans laquelle ledit sel de chlorure est au moins l'un choisi parmi le chlorure de sodium et le chlorure de calcium.

3. Composition aqueuseselon l'une quelconque des revendications 1 à 2,
dans laquelle le premier additif est le métasilicate de sodium.

4. Composition aqueuseselon l'une quelconque des revendications 1 à 3,
dans laquelle ledit deuxième additif est le formiate de sodium.

5. Composition aqueuseselon l'une quelconque des revendications 1 à 4,
dans laquelle ladite composition aqueusecomprend en outre le glycérol,
dans laquelle la concentration molaire dudit glycérol est au moins 2 mol/l et au plus 25 mol/l.

6. Composition aqueuse selon l'une quelconque des revendications 1 à 5,
dans laquelle ladite composition aqueusecomprend en outre un ou plusieurs choisis parmi l'acide acétique et acétates comme troisième additif,
dans laquelle la concentration molaire du troisième additif est 0,1 % ou moins de la concentration molaire du sel de chlorure.
